(19) Europäisches Patentamt / European Patent Office / Office européen des brevets

(11) **EP 3 374 075 B1**

(12) **FASCICULE DE BREVET EUROPEEN**

(45) Date de publication et mention de la délivrance du brevet:
**30.03.2022 Bulletin 2022/13**

(21) Numéro de dépôt: **16809981.0**

(22) Date de dépôt: **10.11.2016**

(51) Classification Internationale des Brevets (IPC):
**B01J 13/02** (2006.01)

(52) Classification Coopérative des Brevets (CPC):
**B01J 13/02;** Y02A 30/00; Y02B 30/90

(86) Numéro de dépôt international:
**PCT/FR2016/052935**

(87) Numéro de publication internationale:
**WO 2017/081426 (18.05.2017 Gazette 2017/20)**

(54) **PROCÉDÉ DE PRÉPARATION D'UN ENSEMBLE DE PARTICULES INORGANIQUES SPHÉRIQUES ET CREUSES**

VERFAHREN ZUR HERSTELLUNG EINES ENSEMBLES AUS ANORGANISCHEN SPHÄRISCHEN HOHLPARTIKELN

PROCESS FOR THE PREPARATION OF AN ENSEMBLE OF INORGANIC SPHERICAL AND HOLLOW PARTICLES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.11.2015 FR 1560838**

(43) Date de publication de la demande:
**19.09.2018 Bulletin 2018/38**

(73) Titulaire: **Pylote**
**31280 Dremil-Lafage (FR)**

(72) Inventeurs:
• **MARCHIN, Loïc**
  **31280 Mons (FR)**
• **DESSE, Marie-Laure**
  **31120 Portet sur Garonne (FR)**

(74) Mandataire: **Cabinet Becker et Associés**
**25, rue Louis le Grand**
**75002 Paris (FR)**

(56) Documents cités:
**WO-A1-2014/160445    FR-A1- 2 973 260**
**US-A- 5 958 361**

• **KIM K D ET AL: "Formation of spherical hollow silica particles from sodium silicate solution by ultrasonic spray pyrolysis method", COLLOIDS AND SURFACES. A, PHYSICACHEMICAL AND ENGINEERING ASPECTS, ELSEVIER, AMSTERDAM, NL, vol. 254, no. 1-3, 10 mars 2005 (2005-03-10), pages 193-198, XP027803093, ISSN: 0927-7757 [extrait le 2005-03-10]**
• **KUMAR NEETESH ET AL: "Synthesis of hollow CdS micro-/nanospheres by CoSP technique and their visible light photocatalytic activities", APPLIED SURFACE SCIENCE, vol. 288, 22 octobre 2013 (2013-10-22), pages 172-179, XP028780692, ISSN: 0169-4332, DOI: 10.1016/J.APSUSC.2013.10.003**
• **HYODO T ET AL: "Preparation of hollow alumina microspheres by microwave-induced plasma pyrolysis of atomized precursor solution", JOURNAL OF THE EUROPEAN CERAMIC SOCIETY, ELSEVIER SCIENCE PUBLISHERS, BARKING, ESSEX, GB, vol. 25, no. 16, 1 novembre 2005 (2005-11-01), pages 3563-3572, XP027618303, ISSN: 0955-2219 [extrait le 2005-11-01]**

- YANJIE HU ET AL: "Preparation of hollow alumina nanospheres via surfactant-assisted flame spray pyrolysis", PARTICUOLOGY, ELSEVIER, AMSTERDAM, NL, vol. 9, no. 5, 20 juin 2011 (2011-06-20), pages 528-532, XP028322899, ISSN: 1674-2001, DOI: 10.1016/J.PARTIC.2011.06.003 [extrait le 2011-09-01]
- HUANG Y ET AL: "Aerosol-assisted flow synthesis of B-doped, Ni-doped and B-Ni-codoped TiO"2 solid and hollow microspheres for photocatalytic removal of NO", APPLIED CATALYSIS B: ENVIRONMENTAL, ELSEVIER, AMSTERDAM, NL, vol. 89, no. 3-4, 15 juillet 2009 (2009-07-15), pages 398-405, XP026130179, ISSN: 0926-3373, DOI: 10.1016/J.APCATB.2008.12.020 [extrait le 2008-12-30]

## Description

L'invention concerne un procédé de préparation de particules inorganiques micrométriques, sphériques, creuses et de faible masse volumique conférant des propriétés d'isolation thermique dans divers types de matrices dans lesquelles elles sont dispersées.

Etat de l'art de l'invention

Dans le domaine des matériaux thermiquement isolants, il est courant d'utiliser des particules pour conférer aux matériaux ces propriétés isolantes. Les particules d'oxyde de métal peuvent être utilisées en tant que barrière thermique, et peuvent entrer ainsi dans la constitution de matériaux thermiquement isolants dans des domaines variés, comme l'aéronautique, le spatial, le bâtiment, la construction automobile, les fours, les systèmes de protection individuelle contre le feu ou la température, etc.

Il a été décrit par la Demanderesse dans le brevet FR2973260 un procédé pour préparer des particules creuses d'oxyde métallique. Il y est proposé un procédé utilisant la technique de pyrolyse d'aérosol, mise en œuvre dans des conditions particulières. Lors de la nébulisation, la solution liquide contient non seulement un précurseur d'un oxyde de métal dans un solvant mais aussi un agent gonflant en une quantité suffisante pour former, lors de sa décomposition, une cavité unique se concentrant dans le cœur de la particule. L'agent gonflant est de préférence un polyacide organique ou l'éthylène glycol et ses dérivés. La taille des pores des particules est inférieure au micron. Les particules ainsi obtenues sont décrites comme étant adaptées à une utilisation en tant que constituants de base pour la réalisation de matériaux formant une barrière thermique et en particulier pour la fabrication de pièces de protection de moteurs d'aéronefs. Toutefois le procédé qui y est décrit nécessite l'utilisation d'agent gonflant, ce qui rend le procédé compliqué à mettre en œuvre, notamment avec les dérivés d'éthylène glycol qui, en se décomposant, peuvent générer du mono ou dioxyde de carbone, des cétones et/ou aldéhydes ou laisser des résidus carbonés. Par ailleurs, les dérivés d'éthylène glycol sont à ce jour reconnus pour leur toxicité spécifique pour certains organes cibles.

Dans ce cadre, la Demanderesse a mis au point des particules sphériques inorganiques creuses et de faible masse volumique qui leur confèrent une conductivité thermique intrinsèque très faible, ce qui leur permet une fois dispersées dans des matériaux de donner à ces derniers des propriétés thermiques isolantes satisfaisantes. Ces propriétés thermiques avantageuses se retrouvent dans des matériaux utilisables à diverses températures, en particulier à des températures extérieures ou températures ambiantes (par exemple entre -30°C et 40°C), comme dans le bâtiment, ou utilisables à des températures variant entre 80 et 500°C, comme dans les fours industriels ou à usage privé, ou encore utilisables à des températures extrêmes (au-delà de 800°C, par exemple), comme dans les barrières thermiques pour les turbines de moteurs aéronautiques. La Demanderesse a mis en place un procédé simple permettant de préparer de telles particules inorganiques, ne nécessitant notamment pas la mise en œuvre d'agent gonflant ou d'agent sacrificiel (ou « template » ) décomposé par voie chimique ou carbonisé à haute température créant le vide à cœur de la particule.

Résumé de l'invention

Un premier objet de la présente divulgation est un ensemble de particules inorganiques, caractérisé en ce que les particules sont sphériques, micrométriques, creuses et de faible masse volumique.

Un deuxième objet est l'utilisation de ces particules en tant que barrière thermique.

En particulier, ces particules présentent un effet barrière thermique très intéressant et peuvent permettre ainsi d'alléger les matériaux dans lesquelles elles se trouvent, ce qui peut être très avantageux notamment dans le domaine de l'aéronautique, les moteurs, ou dans le bâtiment.

Un autre objet de la divulgation est un matériau thermiquement isolant comprenant les particules de la divulgation dispersées dans une matrice.

L'invention est un procédé de préparation de particules selon la divulgation.

Un autre objet de la divulgation est un procédé de préparation d'un matériau selon la divulgation, comprenant la mise en contact d'une matrice avec un ensemble de particules sphériques, micrométriques, creuses et de faible masse volumique.

L'invention est le procédé tel que décrit dans les revendications.

Brève description des figures

Figure 1 : Représentation schématique d'un réacteur adapté pour la mise en œuvre du procédé selon l'invention.
Figure 2 : Image de microscopie Electronique à Balayage de particules creuses de mullite selon la divulgation.

Figure 3 : Image de microscopie Electronique à Balayage de particules creuses d'oxyde de magnésium selon la divulgation.

Description détaillée de l'invention

Le premier objet de la divulgation est un matériau comprenant des particules inorganiques, caractérisées en ce que les particules sont sphériques, micrométriques, creuses et pour lesquelles la poudre a une masse volumique apparente inférieure à 700 kg.m$^{-3}$, de préférence est de 100 à 700 kg.m$^{-3}$.

Dans toute la présente description, on entend, par « particule creuse », une particule présentant une coquille externe dense ou faiblement poreuse et un volume libre à l'intérieur de ladite coquille. Ces particules se distinguent notamment des particules dites poreuses, qui présentent une pluralité de pores qui, bien que pouvant communiquer les uns avec les autres, ne forment pas un seul et unique volume libre situé à l'intérieur d'une coquille de la particule. Les particules selon l'invention sont creuses, l'épaisseur de leur paroi peut être contrôlée, en particulier au moyen des paramètres du procédé de synthèse, et plus spécifiquement en fixant de manière adéquate la concentration en précurseur d'oxyde de métal dans la solution initiale. Par microscopie électronique en transmission, il a pu être calculé que la paroi des particules de diamètres supérieurs à 0,7 microns représente entre 5 % à 50 % du diamètre, ce qui peut représenter en particulier une épaisseur de 0,02 nm à 0,7 microns.

Les poudres, constituées de l'ensemble des particules creuses selon la divulgation, présentent une masse volumique apparente particulièrement faible qui est comprise entre 100 et 700 kg/m$^3$.

La masse volumique, exprimée dans le système international (SI) en kg/m$^3$, représente la masse par unité de volume de la poudre incluant la porosité interstitielle au sein des particules. Etant donné la structure creuse des particules, la valeur de masse volumique est donnée sur la poudre « non tassé » ou dite en vrac (ou « bulk density ») (ou encore dite masse volumique apparente) et éventuellement après tassement (voir DEGALLAIX, Suzanne. Caractérisation expérimentale des matériaux: Propriétés physiques, thermiques et mécaniques. PPUR presses polytechniques, 2007, pages 103-112 ; HAUSSONNE, Jean-Marie. Céramiques et verres: principes et techniques d'élaboration. PPUR presses polytechniques, 2005, pages 73-74).

Les particules selon la divulgation sont sphériques, c'est-à-dire qu'elles ont un coefficient de sphéricité en 3D ou de circularité en 2D supérieur ou égal à 0,75. De préférence, le coefficient de sphéricité est supérieur ou égal à 0,8, supérieur ou égale à 0,85, supérieur ou égal à 0,9, ou encore supérieur ou égal à 0,95.

Le coefficient de circularité en 2D peut être calculé par exemple par mesure du rapport d'aspect au moyen de tout logiciel adapté à partir d'images, par exemple d'images obtenues par microscopie, en particulier microscopie électronique à balayage ou en transmission, des particules. Le coefficient de circularité C d'une particule, en vue 2D, est le rapport $:C = 4\pi \frac{Surface}{Périmètre^2}$ . (Pour un cercle parfait, ce rapport est égal à 1) ( CAVARRETTA, I., O'SULLIVAN, C., et COOP, M. R. Applying 2D shape analysis techniques to granular materials with 3D particle geometries. POWDERS AND GRAINS 2009, 2009, vol. 1145, p. 833-836.)

Dans un mode de réalisation, la divulgation concerne un ensemble de particules telles que définies ci-avant. Dans ce mode de réalisation, l'ensemble peut éventuellement contenir de façon ponctuelle des particules n'ayant pas les critères requis de sphéricité dans la mesure où la sphéricité moyenne en nombre sur l'ensemble des particules répond aux critères fixés dans la présente invention. Ainsi, les termes « ensemble de particules sphériques » désigne une pluralité de particules dont au moins 50% des particules en nombre présentent une sphéricité telle que définie ci-avant. De préférence, au moins 60%, au moins 70%, au moins 80%, au moins 90%, au moins 95% en nombre des particules de l'ensemble considéré ont une sphéricité telle que définie ci-dessus.

Par particule inorganique, on désigne dans la présente divulgation une particule constituée d'un produit non organique, c'est-à-dire qui n'est pas issu de la chimie du carbone. La diversité chimique des particules inorganiques est bien connue de l'homme du métier. Les particules inorganiques sont en particulier des particules de métal (ou d'alliage) ou d'oxyde métallique. En particulier, les particules inorganiques sont des particules d'oxyde de zirconium (ou zircone, de formule $ZrO_2$), éventuellement avec un élément des terres rares, des particules d'oxyde de magnésium (de formule MgO), d'oxyde d'aluminium (de formule $Al_2O_3$), de boehmite (de formule AlOOH), d'oxyde de zinc (de formule ZnO), en particulier de ZnO hexagonal, éventuellement dopé, par exemple dopé à l'aluminium, des particules de silicate d'aluminium, tel que la mullite ($SiO_2$, $Al_2O_3$),des particules de structure pérovskite (à base de titanate de calcium, de formule $CaTiO_3$), des particules d'oxydes mixtes, tels que des mélanges d'oxydes d'aluminium, de magnésium et/ou de silicium, en particulier du binaire ou du ternaire $Al_2O_3$-$SiO_2$-MgO (sapphirine, corderite, spinelle,...), ou un mélange de ceux-ci.

Les particules inorganiques selon la divulgation peuvent éventuellement comprendre au moins un dopant, tel que par exemple l'aluminium, l'erbium, l'europium, l'ytterbium, ou le gadolinium. Le dopant est compris en une proportion de 10% en masse au maximum, de préférence 5% en masse au maximum, en particulier 2% en masse au maximum.

Bien entendu, les particules selon la divulgation peuvent comprendre une proportion minime, par exemple inférieure ou égale à 5% en masse, de contaminants qui peuvent avoir une nature chimique différente de celle desdites particules.

Dans un mode de réalisation préféré, les particules inorganiques sont des particules de ZnO, en particulier de ZnO hexagonal, éventuellement dopé, par exemple dopées à l'aluminium, des particules d'alumine, en particulier d'alumine amorphe, cubique ou rhomboédrique, des particules de boehmite, en particulier orthorhombique, des particules de dihydroxyde de magnésium, en particulier hexagonal, des particules d'oxyde de magnésium, en particulier cubique, des particules de dioxyde de zirconium, en particulier quadratique, des particules de zircone stabilisée à l'yttrium, des particules de mullite, des particules de $MgAl_2O_4$, ou des particules de $Y_3Al_5O_{12}$.

Dans un mode particulier, les particules inorganiques sont des particules de ZnO, en particulier de ZnO hexagonal, éventuellement dopées, par exemple dopées à l'aluminium, des particules d'alumine, en particulier d'alumine amorphe, cubique ou rhomboédrique, des particules de boehmite, en particulier orthorhombique, des particules de dihydroxyde de magnésium, en particulier hexagonal, des particules d'oxyde de magnésium, en particulier cubique, des particules de zircone stabilisée à l'yttrium, des particules de $CaCu_3Ti_4O_{12}$, des particules de mullite ($SiO_2$-$Al_2O_3$), des particules de $MgAl_2O_4$, ou des particules de $Y_3Al_5O_{12}$.

Dans un mode plus particulier, les particules sont des particules de MgO, de ZnO, de $ZrO_2$ éventuellement partiellement ou totalement stabilisé avec un élément choisi parmi les terres rares (en particulier l'yttrium), de Mullite ($SiO_2$-$Al_2O_3$), d'alumine, de telles particules dopées, ou leur mélange. Dans un autre mode plus particulier, les particules sont des particules de MgO, de ZnO, de $ZrO_2$ stabilisée à l'yttrium, de Mullite ($SiO_2$-$Al_2O_3$), ou de telles particules dopées. Dans un mode plus spécifique, les particules sont des particules de Mullite.

Les particules selon la divulgation sont micrométriques, c'est-à-dire que le diamètre moyen des particules est compris entre 0,1 et 10 micromètres. Selon un autre mode particulier, le diamètre des particules selon la divulgation est compris entre 0,2 et 7 micromètres et de préférence entre 0,3 et 5 micromètres, et est de préférence compris entre 0,5 et 2. L'homme du métier connaît les techniques adaptées pour déterminer le diamètre des particules ou des ensembles de particules selon la divulgation, et il connaît également le degré d'incertitudes existant sur ces mesures. Par exemple, le diamètre moyen des particules d'un ensemble, l'écart-type et la distribution des tailles notamment peuvent être déterminés par des études statistiques à partir d'images de microscopie, par exemple de microscopie électronique à balayage (MEB) ou en transmission (MET).

Dans le cas où les particules sont au sein d'un ensemble, les valeurs de diamètres ci-dessus peuvent correspondre au diamètre moyen des particules en nombre, même si certaines des particules de l'ensemble ont des diamètres en dehors de cette gamme.

Avantageusement, toutes les particules de la population ont un diamètre tel que défini ci-dessus.

Dans un mode de réalisation, l'écart-type relatif à la taille des particules dans une population de particules selon l'invention est inférieur ou égal à 50%, de préférence inférieur ou égal à 20%.

La distribution des tailles des particules dans l'ensemble de particules selon la divulgation peut être monomodale ou multimodale.

Dans la présente divulgation, l'ensemble de particules selon la divulgation présente l'avantage d'avoir des particules individualisées, c'est-à-dire des particules non agrégées. Ainsi, chaque particule de l'ensemble n'est pas liée à d'autres particules par des liaisons chimiques fortes telles que des liaisons covalentes.

Un ensemble de particules selon la divulgation peut éventuellement contenir de façon ponctuelle des particules ne répondant pas à cette caractéristique, dans la mesure où le critère de non agrégation est respecté par au moins 70%, au moins 80%, au moins 90%, au moins 95% en nombre des particules de l'ensemble considéré sont individualisées.

De préférence, une particule de l'ensemble selon la divulgation n'est pas constituée par l'agrégation de plusieurs particules de taille inférieure. Ceci peut être clairement visualisé par exemple par des études en microscopie, notamment en microscopie électronique à balayage ou en transmission. Ceci signifie que les seuls constituants possibles des particules selon la divulgation sont des cristallites de taille nettement inférieure à celle des particules selon l'invention. Une particule selon la divulgation est de préférence formée d'au moins deux cristallites. Une cristallite est un domaine de matière ayant la même structure qu'un monocristal, c'est-à-dire qu'au sein de chaque plan atomique définissant cette structure il n'y a pas de discontinuité majeure de l'ordre cristallin hormis des défauts ponctuels (lacunes, atomes en insertion ou substitution) ou linéaires (dislocations).

A titre de comparaison, les techniques d'atomisation classiquement utilisées dans l'art fournissent généralement des particules non sphériques agrégées. Les objets qui sont formés par ces agrégats de particules peuvent être sphériques. Les particules ne sont pas parfaitement sphériques et peuvent être agrégées, ce qui n'est pas le cas avec les particules de la présente divulgation qui présentent un haut coefficient de sphéricité supérieur à 0,75.

De préférence, les particules selon la divulgation sont des particules individualisées non déformables. Aussi, la surface de chaque particule qui est éventuellement en contact avec d'autres particules est généralement très faible. Dans un mode de réalisation, le rayon de courbure du ménisque formant le contact entre deux particules différentes de l'ensemble est inférieur à 5%, de préférence inférieur à 2%, du rayon de chacune des deux particules, en particulier au sein d'une matrice ou sous forme de poudre.

La présente divulgation a également trait à l'utilisation des particules selon la divulgation en tant que barrière thermique. Les particules selon la divulgation peuvent permettre de diminuer de manière avantageuse la conductivité thermique des matériaux utilisés classiquement comme isolants thermiques, en particulier cette diminution est d'au moins 10% et peut éventuellement aller jusqu'à 50 % par rapport à la conductivité thermique des matériaux utilisés classiquement comme isolants thermiques. Ainsi, et comme spécifié précédemment, les particules peuvent présenter l'avantage d'alléger les matériaux dans lesquelles elles sont intégrées. Par exemple, les particules intégrées dans des matériaux pour l'aéronautique peuvent permettre d'alléger ces matériaux thermiquement isolants et ainsi de diminuer la consommation en carburants et/ou de diminuer le dioxyde de carbone émis.

Selon un aspect, la divulgation concerne un matériau thermiquement isolant comprenant des particules selon la divulgation et une matrice. Plus spécifiquement, le matériau comprend des particules dispersées dans une matrice. Les caractéristiques des particules selon la divulgation rendent leur dispersion particulièrement homogène, ce qui contribue à la performance d'isolation thermique.

Selon la présente divulgation, le terme matrice désigne tout matériau utilisé pour une isolation thermique, et pouvant avantageusement bénéficier de l'inclusion de particules selon la divulgation.

Il s'agit généralement de matrices solides, comme des matériaux à base de céramiques, de fibres, de mousses organiques (polymères, résines, par exemple) ou inorganiques, d'émail, ou un de leur mélange (matériaux composites), généralement utilisés comme isolants thermiques. Ces matrices peuvent être utilisées dans des domaines industriels variés, tels que l'aéronautique, l'aérospatiale, les moteurs, la construction automobile, le bâtiment, les fours, les systèmes de protection individuelle contre le feu ou la température, etc.

Selon un aspect de la divulgation, les matériaux peuvent être des céramiques isolantes, ou dites « barrières thermiques », contenant des particules selon l'invention. Ainsi, ces matériaux peuvent fonctionner à plus haute température que les systèmes actuellement utilisés, qui sont à base de particules de zircone partiellement stabilisée à l'oxyde d'yttrium, et de structure dense.

Il peut s'agir d'une pièce composite à matrice céramique, obtenue par infiltration d'une suspension d'une poudre céramique dans un renfort fibreux. Les composites à matrice céramique (ou composites mixtes céramiques, ou encore appelés CMC) sont des matériaux émergeants présentant des propriétés thermomécaniques élevées et pouvant être utilisés dans des conditions opératoires sévères, comme des températures supérieures à 750°C ou 800°C, voire supérieures à 1000°C. Compte tenu de leurs performances thermomécaniques élevées, ces matériaux trouvent une application particulière dans la réalisation de pièces mécaniques, par exemple dans le domaine de l'aéronautique ou l'aérospatiale, par exemple, pour des parties de moteur, pour des turbines à gaz ou des chambres à combustion. Selon un mode particulier, la divulgation concerne des matériaux composites de matrice céramique comprenant un ensemble de particules selon la divulgation, et éventuellement un renfort fibreux.

Dans le domaine des fours de cuisson ou industriels, il est courant d'utiliser des cavités revêtues par une couche d'émail. L'acier émaillé est connu pour être résistant aux hautes températures (en général entre 100 et 500°C) et pour présenter une capacité de réflexion de la chaleur lui permettant, déjà intrinsèquement d'avoir comme applications les colonnes et échangeurs thermiques, les fours, ou les tuyaux de gaz chauds.

Ainsi, selon un mode particulier, la divulgation a trait à un matériau comprenant une matrice d'émail et un ensemble de particules selon la divulgation, et en particulier de particules d'oxydes de magnésium (MgO). La norme AFNOR NF92-010 de 1977 définit l'émail comme étant une substance résultant de la fusion ou du frittage de constituants non-organiques et destinés à former un produit vitrifié fondu ou capable de l'être, sur un support métallique. La température de fusion des émaux est supérieure à 500°C (932°F). Le principal constituant de l'émail est généralement la silice, sous forme pure ou combinée avec des feldspaths, des argiles et/ou des micas. D'autres constituants peuvent être classiquement utilisés dans l'émail, comme les réfractaires (par exemple l'alumine, $Al_2O_3$), les fondants qui abaissent les températures de fusion et de cuisson et qui augmentent le coefficient de dilatation (ils sont composés principalement de borax - tétraborate de sodium, $Na_2B_4O_7$- sous forme anhydre ou hydratée, et d'oxydes alcalins - par exemple les oxydes de sodium, $Na_2O$, potassium $K_2O$, lithium $Li_2O$, calcium CaO, magnésium MgO et strontium SrO- pour donner des sels de borosilicates, les agents d'adhérence (par exemple des oxydes métalliques), les opacifiants ou les colorants. Ainsi, l'invention peut consister à introduire des particules selon la divulgation, afin de diminuer suffisamment la diffusivité et/ou conductivité thermique d'un revêtement émaillé sur substrat pour lui permettre de diminuer les pertes thermiques vers l'extérieur du substrat. On peut par exemple utiliser les particules de la présente divulgation aux parois de fours électroménagers ou industriels, dont les températures de service, ne dépasse pas 400°C. De manière plus générale, en limitant les pertes thermiques, la consommation électrique du four est plus homogène et mieux optimisée, entraînant des réductions de coûts énergétiques. Sans se limiter à une théorie de l'invention, en pratique, les particules selon la divulgation sont réparties de manière homogène dans la couche émaillée, ce qui va induire une porosité. On peut parler alors de couches composites / émail car les particules ne sont pas fondues aux températures de vitrification de l'émail en-dessous de 1200°C. Les particules selon la divulgation peuvent être introduites à un taux entre 10 et 60 % en masse dans la barbotine par rapport à l'extrait sec. Le gain énergétique apporté peut être évalué en fonction de la consommation électrique du four et, dans ce cadre, les particules selon la divulgation ainsi utilisées peuvent apporter un gain entre 5 % et 30 %.

Ce matériau à base d'émail peut donc être utilisé comme constituant de colonnes, d'échangeurs thermiques, de fours, ou de tuyaux de gaz chauds. Ce matériau se présente généralement sous forme de film ou de couche. Ce matériau sous forme de couche présente de préférence une épaisseur de 50 à 400 $\mu$m.

Selon un mode particulier, la matrice solide peut être une matrice polymérique, en particulier une matrice polymérique thermoplastique. Parmi les matrices polymériques utilisables selon la divulgation, on peut citer notamment le polypropylène, le polyéthylène, le polyéthylène téréphtalate, le polyoxyméthacrylate, les polyuréthanes, l'ABS (Acrylonitrile Butyrène Styrène), le PLA (Acide PolyLactique) ou le polyéthylènevinylacétate. Selon un mode particulier, la divulgation concerne des matériaux comprenant une matrice polymérique, en particulier choisie parmi le polypropylène, le polyéthylène, le polyéthylène téréphtalate, le polyoxyméthacrylate, les polyuréthanes, l'ABS (Acrylonitrile Butyrène Styrène) ou le polyéthylènevinylacétate, et un ensemble de particules selon l'invention.

Dans le domaine du bâtiment, les matériaux isolants thermiquement, les plus courants, sont les isolants fibreux, à base de fibres naturelles ou synthétiques, telles que la laine de verre ou la laine de roche, les isolants cellulaires, du type polymère expansé, tel que le polystyrène, le polypropylène, le polychlorure de vinyle, le polyéthylène (en particulier de basse ou de haute densité) expansé ou extrudé, ou les mousses phénoliques ou de polyuréthane. Les isolants minces multicouches réflecteurs sont des complexes techniques de faible épaisseur composés d'un assemblage de films réflecteurs et de séparateurs associés (ouates, mousses, etc.). Les films réflecteurs ont pour fonction de réfléchir le rayonnement thermique : c'est le principe du double vitrage et de la couverture de survie appliqué à l'isolation de la maison. A efficacité thermique équivalente, les isolants minces multicouches réflecteurs permettent la mise en place de dispositifs d'isolation de 3 à 5 fois plus minces (lames d'air incluses) que les isolants épais traditionnels. Ils sont parfaitement adaptés à l'isolation de bâtiments résidentiels, commerciaux et industriels - en toiture, combles, murs et sols. Les performances d'un isolant sont reliées aux transferts thermiques par rayonnement, convection et conduction. Plus la conductivité sera faible, meilleure sera l'isolation, à savoir la capacité à laisser passer un flux de chaleur. La conductivité est mesurée par des techniques de laboratoire usuelles : l'isolant est placé entre 2 ambiances de températures différentes afin de créer une différence de température ($\Delta$T) et la quantité d'énergie nécessaire, pour maintenir une température constante de chaque côté de l'isolant, est mesurée et est égale au flux thermique traversant le produit. De cette mesure de conductivité thermique découle une valeur de résistance thermique R, qui est le rapport entre l'épaisseur (e) et la conductivité thermique ($\lambda$) d'un isolant, exprimé en $m^2$.K/W (R = e/($\lambda$)). La masse par unité de volume résultante de la mousse est dépendante des conditions d'extrusion et de l'agent nucléant présent. Préférentiellement, la masse par unité de volume de la mousse isolante est de moins de 20 kg/$m^3$, en particulier moins de 17 kg/$m^3$.

Ainsi, sans vouloir se lier à une quelconque théorie de l'invention, il semble que l'utilisation des particules selon la divulgation dans le cadre d'isolants thermiques pour le bâtiment permet d'apporter une double porosité à deux échelles : l'une apportée par les bulles formées lors du « moussage », l'autre par l'ajout de particules creuses selon la divulgation ; les particules étant de natures minérales, elles peuvent également contribuer à la formation de mousse, comme agent nucléant passif. On peut ainsi imaginer que l'air contenu dans les particules creuses pourrait être également être libéré lors de l'étape finale de la production de mousse, de ce fait les particules creuses auraient un rôle d'agent actif et passif. Les particules selon la divulgation étant de faible masse volumique apparente contribuent également à un allégement du matériau, mesurable par la diminution de la masse volumique de la mousse d'isolation pour une même épaisseur.

Les particules selon la divulgation peuvent être incorporées par les méthodes classiques d'extrusion et/ou granulation.

Selon un mode particulier, la divulgation concerne des matériaux isolants thermiquement pour le bâtiment, comprenant une matrice et un ensemble de particules selon la divulgation, ladite matrice étant en particulier une matrice de fibres naturelles ou synthétiques, telles que la laine de verre ou la laine de roche, ou une matrice d'isolants cellulaires, du type polymère expansé, tel que le polystyrène, le polypropylène, le polychlorure de vinyle, ou le polyéthylène expansé ou extrudé, ou une matrice de mousses phénoliques ou de polyuréthane.

L'inclusion des particules selon la divulgation dans une matrice permet de conférer des propriétés thermiques particulièrement avantageuses à la matrice. L'inclusion des particules dans la matrice peut être effectuée par les techniques classiquement utilisées dans l'art, notamment par agitation mécanique dans la barbotine, précurseur de la matrice solide. Ceci peut être notamment le cas lorsque les matériaux sont des matrices céramiques. Un procédé de fabrication d'un tel matériau comprend notamment le frittage d'une barbotine comprenant des particules selon l'invention et les précurseurs céramiques, selon des méthodes classiquement mises en œuvre pour les céramiques. Lorsque la matrice comprend des fibres, les particules selon la divulgation peuvent être incorporées dans un composite incluant les fibres, comme dans le cas des CMC. Les particules selon l'invention peuvent être introduites par exemple par mélange intime de fibres et de particules selon la divulgation sous la forme d'une seule barbotine ou par imprégnation des fibres à l'aide d'une barbotine contenant les particules selon la divulgation.

Dans le cas où la matrice est classiquement extrudée ou granulée, les particules selon la divulgation peuvent être incorporées au mélange maître comprenant les précurseurs de la matrice et destiné à être ensuite classiquement extrudé et/ou granulé.

Le matériau comprenant les particules selon la divulgation peut être notamment sous forme de poudre, de billes, de pastilles, de granulés, de couches (ou de films) et/ou d'extrudés, les opérations de mise en forme ultérieures éventuelles peuvent être réalisées par les techniques classiques connues de l'homme du métier.

En particulier, le procédé de mise en forme du matériau ne nécessite pas d'étape supplémentaire de dispersion des particules au sein de la matrice par rapport au procédé de mise en forme classiquement utilisé pour les matrices sans inclusion de particules. Le procédé de mise en forme peut de préférence être mis en œuvre sur les équipements et filières de transformation utilisés classiquement pour les matrices sans inclusion de particules. La dispersion des particules au sein de la matrice peut, dans certains modes de réalisation, être réalisée sans agent dispersant chimique supplémentaire.

Dans un mode de réalisation particulier, la dispersion des particules au sein de la matrice est réalisée en présence ou non d'un agent dispersant chimique, tel qu'un surfactant.

L'homme du métier est à même de déterminer si l'utilisation d'un agent dispersant est nécessaire pour obtenir la dispersion recherchée et d'adapter la quantité d'agent dispersant à utiliser le cas échéant. Par exemple, l'agent dispersant peut être utilisé en une quantité de 0,5 à 50% en masse par rapport à la masse de particules, notamment en une quantité de 0,5 à 20% en masse par rapport à la masse de particules.

Les particules selon la divulgation ont la particularité de se disperser de façon substantiellement homogène en volume dans la matrice, quelles que soient leur nature chimique et la nature de la matrice. Cela signifie que la quantité de particules par unité de volume est généralement la même en tout point de la matrice. Dans le cas d'une matrice solide, la quantité de particules par unité de surface est de préférence à peu près la même quelle que soit la surface de la matrice considérée, qu'il s'agisse d'une surface d'extrémité de la matrice, ou d'une surface obtenue par coupe du matériau par exemple. Ainsi, l'amélioration de l'isolation thermique obtenue et conférée à la matrice par l'inclusion des particules selon la divulgation est répartie de façon substantiellement homogène dans l'ensemble du volume de la matrice.

Le matériau selon la divulgation peut comprendre des particules selon la divulgation en toute proportion adaptée pour lui conférer la propriété d'isolant thermique désirée. Par exemple, le matériau peut comprendre de 0,1 à 80% en masse de particules par rapport à la masse totale de matrice et de particules, de préférence de 1 à 60% en masse, en particulier de 2 à 25% en masse.

Selon un mode particulier, le matériau thermiquement isolant comprend des particules de mullite selon la divulgation.

Les particules et matériaux selon la divulgation peuvent être obtenus par un procédé tel que décrit ci-dessous.

Un autre objet de la présente invention est un procédé de préparation d'un ensemble de particules selon la divulgation tel que décrit ci-avant. Le procédé selon l'invention est un procédé dit « par pyrolyse d'aérosol » (ou spray pyrolyse) qui est mis en œuvre à des températures de séchage et non pas de pyrolyse. Ce procédé est un procédé amélioré par rapport au procédé de pyrolyse d'aérosol notamment décrit dans la demande FR 2 973 260. Le procédé selon l'invention ne nécessite pas d'agent gonflant. Il est généralement mis en œuvre dans un réacteur. L'ensemble de particules ainsi obtenu peut ainsi correspondre à des grandes quantités, plus spécifiquement la quantité obtenue peut être de plus de 100g, 500g, 1kg, 15 kg, ou 20kg, cette quantité variant en fonction de l'alimentation en solution fournie et/ou désirée au réacteur. L'ensemble des particules ainsi obtenu présente donc l'avantage d'être obtenu en grande quantité, tout en respectant les caractéristiques des particules telles que décrites ci-avant.

Ce procédé comprend les étapes suivantes :

(1) la nébulisation à une température entre 10°C et 40°C d'une solution liquide contenant un précurseur du ou des matériaux inorganiques duquel ou desquels on veut former des particules à une concentration molaire supérieure ou égale à 0,5 mol/L dans la solution, de façon à obtenir un brouillard de gouttelettes de solution,

(2) le chauffage du brouillard obtenu à une température entre 150°C et 400°C, apte à assurer l'évaporation du solvant pour augmenter la concentration en précurseur du ou des matériaux inorganiques en périphérie des gouttelettes et apte à assurer la formation de particules, pendant une durée comprise entre 1 et 10 secondes,

(3) le chauffage des particules obtenues à l'étape (2) à une température entre 400°C et 700°C, apte à assurer la décomposition du précurseur pour former le matériau inorganique avec simultanément la précipitation et l'extraction complète du solvant pour former la coquille des particules creuses pendant une durée entre 10 et 30 secondes,

(4) la densification de la coquille des particules obtenues à une température entre 200°C et 1000°C, pendant une durée comprise entre 20 et 30 secondes, (4') éventuellement la trempe des particules obtenues, et

(5) la récupération des particules ainsi formées, les étapes (2), (3) et (4) étant réalisées à des températures croissantes.

L'étape (1) de nébulisation est réalisée à une température de 10 à 40 °C, de préférence pendant une durée inférieure ou égale à 10 secondes, en particulier inférieure ou égale à 5 secondes. A l'étape (1), la solution liquide est en général sous forme de solution aqueuse ou hydro alcoolique ou sous forme d'un sol colloïdal. La solution liquide de l'étape (1) est introduite dans un réacteur par nébulisation. La concentration totale de précurseur(s) du ou des matériaux inorganiques duquel ou desquels on veut former des particules est supérieure ou égale à 0,5 mol/L dans la solution, soit une concentration supérieure ou égale à 10 ou à 20 % en masse par rapport à la masse totale de la solution. Selon un mode particulier, la concentration totale de précurseur(s) est comprise entre 0,5 et 3,0 mol/L (M).

L'étape (2) de chauffage (séchage) est réalisée à une température de 150 à 400 °C, de préférence de 200 à 400°C (avantageusement de 300 à 400°C), et pendant une durée comprise entre 1 et 10 secondes.

L'étape (3), dite de pyrolyse, est réalisée à une température de 400 à 700 °C, et pendant une durée comprise entre 10 et 30 secondes.

L'étape (4) de densification des coquilles est réalisée à une température entre 200 et 1000°C. Cette étape est réalisée de préférence à une température de 400 à 800°C, plus particulièrement de 500 à 700°C, en particulier lorsque les particules que l'on veut préparer sont en totalité ou au moins en partie sous forme cristallisée. L'étape de densification est réalisée pendant une durée comprise entre 20 et 30 secondes. Ainsi, lors des étapes (2), (3) et (4), il y a évaporation du solvant, formation de particules avec saturation en précurseur(s) en périphérie des gouttelettes, décomposition du précurseur pour former le matériau inorganique avec simultanément précipitation et extraction complète du solvant pour former la coquille des particules creuses, puis densification de la coquille des particules, ces événements se succédant mais pouvant se chevaucher dans le temps au fur et à mesure que les étapes avancent.

L'étape (5) de récupération est réalisée de préférence à une température inférieure à 100 °C, et/ou de préférence pendant une durée inférieure ou égale à 10 secondes, en particulier inférieure ou égale à 5 secondes. L'étape (5) de récupération des particules est réalisée de préférence par dépôt des particules sur un filtre en sortie du réacteur.

De préférence, les étapes (2), (3) et (4) sont réalisées dans le même réacteur. En particulier, l'ensemble des étapes du procédé (excepté les étapes de post-traitement) sont réalisées dans le même réacteur.

L'ensemble des étapes du procédé, en particulier les étapes (2), (3) et (4), sont réalisées dans la continuité l'une de l'autre. Le profil de température appliqué dans le réacteur est adapté en fonction des particules, et en particulier de la nature chimique des particules, que l'on souhaite former pour que ces trois étapes aient lieu les unes après les autres. De préférence, la température dans le réacteur est ajustée par l'intermédiaire d'au moins un, de préférence 3, éléments chauffants dont les températures peuvent être définies indépendamment.

Les étapes (2), (3) et (4) sont réalisées à des températures croissantes.

Selon un mode particulier, les températures de l'étape (4) sont supérieures d'au moins 200°C à la température de décomposition du ou des précurseur(s). En particulier pour les nitrates de métal, par exemple pour le nitrate de magnésium qui présente une température de décomposition de 300°C, l'étape 4 sera au minimum à 500°C.

Selon un mode particulier de l'invention, lorsque des particules de $Al_2O_3$ ou $ZrO_2$, sont préparées, la température de décomposition du nitrate correspondant étant de 200°C, la température de l'étape (4) est de préférence au minimum de 400°C. Selon un autre mode particulier de l'invention, lorsque des particules de MgO sont préparées, la température de l'étape (4) est de préférence au minimum de 500°C-550°C. Selon un autre mode particulier de l'invention, lorsque des particules de ZnO sont préparées, la température de décomposition du nitrate correspondant étant de 350-380°C, la température de l'étape (4) est de préférence au minimum de 550°C et de préférence à 700°C.

Comme spécifié précédemment, le procédé selon l'invention ne nécessite pas la présence d'agent gonflant, tel que notamment décrit dans le brevet FR2973260.

Le procédé selon la présente invention comprend de préférence en outre, entre l'étape de densification (4) des coquilles des particules creuses et l'étape de récupération des particules (5), une étape (4') de trempe des particules. L'étape de trempe (4') correspond à une diminution en température rapide, en particulier pour arriver à température ambiante (plus spécifiquement entre 15 et 30°C) à l'étape (5). L'étape de trempe correspond avantageusement à une diminution de température d'au moins 300°C/s, par exemple pour atteindre une température comprise entre 15 et 50°C. L'étape de trempe (4') est de préférence réalisée par entrée d'un gaz, de préférence de l'air, froid sur tout ou partie de la circonférence du réacteur. Un gaz est dit froid dans la présente invention s'il est à une température comprise entre 15 et 50°C, de préférence entre 15 et 30°C. Dans un mode de réalisation particulier, le gaz entrant dans le réacteur pour cette étape de trempe est un gaz différent de l'air. En particulier, il peut s'agir d'un gaz neutre (tel que l'azote ou l'argon), d'un gaz réducteur (tel que l'hydrogène ou le monoxyde de carbone), ou d'un quelconque mélange de tels gaz.

Le procédé est mis en œuvre de préférence en absence de flux de gaz vectorisant le brouillard depuis le début (e.g. le bas) du réacteur. Le flux laminaire permettant d'amener la matière dans la zone dans laquelle la température est plus élevée est avantageusement créé uniquement par l'aspiration en fin (e.g. haut) du réacteur, produisant une dépression, par exemple de l'ordre de quelques pascals ou quelques dizaines de pascals.

Un tel mode de réalisation permet d'utiliser un réacteur sans entrée de gaz dans sa partie inférieure, limitant ainsi les perturbations du procédé et les pertes, et optimisant ainsi le rendement du procédé et la distribution en taille des particules obtenues.

Dans un autre mode de réalisation, le réacteur dans lequel le procédé est mis en œuvre comprend également une entrée de gaz au niveau où le brouillard est formé. Le gaz qui entre dans le réacteur à ce niveau est de préférence de l'air.

De préférence, le procédé pour préparer les particules selon l'invention ne comprend pas d'autre étape de chauffage que celles mises en œuvre à l'intérieur du réacteur de pyrolyse d'aérosol.

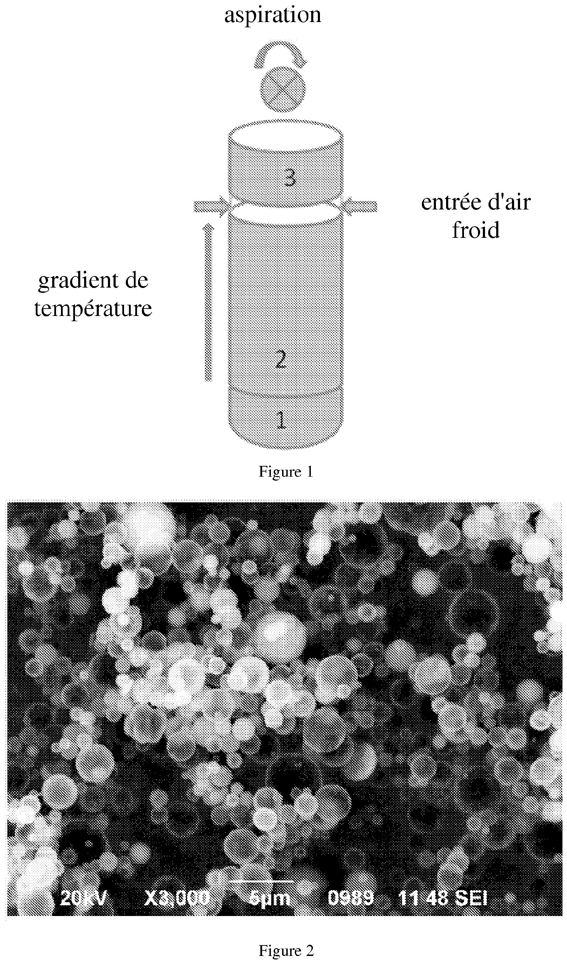

La figure 1 présente un exemple de schéma de réacteur pour la mise en œuvre du procédé selon l'invention. La partie basse (1) du réacteur comprend la solution liquide contenant un précurseur du ou des matériaux inorganiques duquel ou desquels on veut former des particules à une concentration molaire donnée dans un solvant. Cette solution est nébulisée au niveau de la partie intermédiaire (2), et les gouttelettes montent par aspiration dans le réacteur. L'entrée de gaz froid, en particulier d'air froid, permet une trempe des particules. La partie supérieure (3) du réacteur est également à une température froide (inférieure à 100°C, par exemple comprise entre 15 et 50°C).

Le précurseur ou les précurseurs du ou des matériaux inorganiques duquel ou desquels on veut former des particules peut être de toute origine. Il(s) est(sont) introduit(s) à l'étape (1) du procédé sous forme d'une solution liquide, en particulier une solution aqueuse ou hydro alcoolique contenant les ions métalliques (sous forme de sel organique ou inorganique, autre que le chlore du métal considéré, par exemple du nitrate du métal considéré, comme le nitrate d'aluminium), et éventuellement les molécules précurseurs (comme des organosilanes, par exemple du tetraéthylorthosilicate, ou alcoxydes, par exemple un alcoxyde d'aluminium, comme l'isopropoxyde d'aluminium), ou encore sous forme d'un sol colloïdal (comme une dispersion colloïdale de nanoparticules du (ou des) métal (métaux) ou de l' (ou des) oxyde(s) du métal (des métaux) considéré(s)). De préférence, le précurseur ou les précurseurs du ou des matériaux inorganiques est(sont) introduit(s) à l'étape (1) du procédé sous forme d'une solution liquide, en particulier une solution aqueuse ou hydro alcoolique contenant les ions métalliques (comme un sel organique ou minéral du métal considéré). De préférence, il s'agit de nitrate du métal considéré. Le ou les précurseurs du ou des matériaux inorganiques est ou sont choisi(s) en fonction des particules que l'on souhaite former. Dans un mode de réalisation particulier, ce précurseur est au moins en partie issu de rebuts de plantes ou alimentaires, qui représentent des biosources. Comme exemples de tels précurseurs de matériau inorganique, on peut notamment citer le silicate de sodium issu des coques de riz. Des résidus d'abattoir, comme des os, peuvent servir de source de phosphate de calcium, du sang peut servir de précurseur d'oxyde de fer et/ou des coquilles de crustacés peuvent servir de source de carbonate de calcium.

Selon un mode particulier de l'invention, les particules selon la divulgation sont constituées en tout ou partie par une composante métallique, éventuellement hybride organique-inorganique. Cette composante peut être obtenue par voie sol-gel à partir d'au moins un précurseur moléculaire métallique comportant un ou plusieurs groupes hydrolysables, éventuellement en présence d'un agent dispersant pour les sols colloïdaux favorisant la stabilité de la solution dans l'étape (1) du procédé. Dans le cas où les particules obtenues selon le procédé décrit ci-avant sont hybrides (organique/inorganique), une étape de post-traitement (i.e. après récupération des particules) est avantageusement mise en œuvre, en particulier une étape de chauffage des particules est mise en œuvre, afin de rendre les particules complètement inorganiques.

Le procédé selon l'invention permet d'obtenir des particules présentant un haut degré de pureté. Ces particules ne nécessitent pas nécessairement la mise en œuvre d'étapes ultérieures de traitement, telles qu'un lavage, un traitement thermique, un broyage, etc., avant leur utilisation.

Dans le procédé selon l'invention, toutes les entités introduites dans le réacteur sont transformées, ce qui est un avantage important car le procédé génère peu de déchets. En outre, le taux d'utilisation des atomes est élevé et conforme aux exigences de la chimie verte.

Le procédé selon l'invention peut comprendre au moins une étape de post-traitement des particules (i.e. après récupération des particules). Par exemple, il peut s'agir d'une étape de lavage avec un solvant adapté, d'une étape de chauffage des particules, et/ou d'une étape de revêtement des particules, en particulier pour « étanchéifier » lesdites particules. En particulier, une étape de post-traitement par chauffage des particules peut être nécessaire, en particulier après récupération des particules, pour optimiser les propriétés des particules telles que leur composition ou leur structure cristalline. Une étape de post-traitement par chauffage des particules sera généralement d'autant moins nécessaire que la vitesse des gouttes puis des particules dans le réacteur sera faible.

Le procédé selon l'invention permet de contrôler la taille ainsi que l'épaisseur de coquilles des particules en sortie de procédé.

Un autre objet de l'invention est un ensemble de particules susceptible d'être préparé selon le procédé défini ci-dessus, et en particulier par la mise en œuvre du procédé comprenant ou constitué des étapes (1) à (5), telles que définies ci-dessus. Les particules ainsi préparées présentent les caractéristiques décrites ci-avant. Ce procédé permet en particulier d'obtenir des particules creuses, sphériques, micrométriques et présentant une faible masse volumique telle que décrite ci-dessus, et avantageusement individualisées. De préférence, il permet également que chaque particule ne soit pas constituée par l'agrégation de plusieurs particules de taille inférieure. De préférence, les particules obtenues par ce procédé sont individualisées et non déformables.

De par la rapidité du procédé de préparation des particules, et l'existence éventuelle d'une étape de trempe à la fin du procédé de préparation des particules selon l'invention, celles-ci peuvent comprendre n'importe quel constituant chimique qu'il est possible de densifier, notamment de cristalliser, même les phases métastables. En effet, les conditions particulières mises en œuvre dans le procédé permettent d'obtenir sous forme densifiée des composés dont la température de dégradation est inférieure à la température effectivement appliquée, car le temps passé à haute température est très court. Dans ce contexte, les termes « haute température » désignent de préférence une température supérieure à 40°C. Le « temps passé à haute température » désigne généralement le temps passé pour les étapes de séchage, pyrolyse et densification. De préférence, le temps passé à haute température n'excède pas 70 secondes, en particulier il est compris entre 30 et 70 secondes. De préférence, la trempe est caractérisée par une vitesse de refroidissement supérieure ou égale à 100°C ou supérieure à 300°C par seconde. Dans un mode de réalisation, les particules selon l'invention comprennent un type d'oxyde qui nécessite un apport d'énergie pour densifier, notamment pour cristalliser. On peut mentionner par exemple l'alumine, l'oxyde de zinc, et l'oxyde de magnésium, la mullite ou l'oxyde de zirconium stabilisé ou non. De telles particules ne peuvent pas être obtenues de la même façon par les procédés classiques utilisés dans l'art antérieur, notamment ceux qui ne comprennent pas d'étape de trempe.

Un dernier objet de la divulgation est un procédé de préparation d'un matériau selon la divulgation, comprenant la mise en contact d'une matrice telle que précédemment définie avec au moins un ensemble de particules selon la divulgation ou susceptible d'être obtenu selon le procédé décrit précédemment. Ce procédé de préparation d'un matériau comprend ensuite de préférence une étape de mise en forme du matériau telle que décrite ci-avant.

Sauf précision contraire, les pourcentages mentionnés dans la présente invention sont des pourcentages en masse.

Les exemples qui suivent sont fournis à titre illustratif, et non limitatif, de l'invention.

## Exemples

Dans les exemples qui suivent, les mesures de granulométrie LASER ont été effectuées à l'aide d'un granulomètre LASER Mastersizer 2000 (Malvern Instruments), sur des particules en voie humide dans l'eau.

### Exemple 1 : Particules creuses d'oxyde de Magnésium (MgO)

Les particules d'oxyde de magnésium (MgO) ont été préparées selon le procédé ci-dessous.

Dissolution de 20,4g de nitrate de magnésium hexahydraté dans 79,6 g d'eau déminéralisée, soit une concentration molaire en précurseur de 1,0 mol/L.

La solution précurseur est nébulisée par le procédé de spray pyrolyse selon l'invention.

Le profil des températures maximales atteintes dans le réacteur dans lequel se déroulent les étapes de séchage, pyrolyse et densification est le suivant : 300°C, 400°C, 500°C, respectivement, et l'étape de trempe est réalisée pour arriver à température ambiante avant l'étape de récupération.

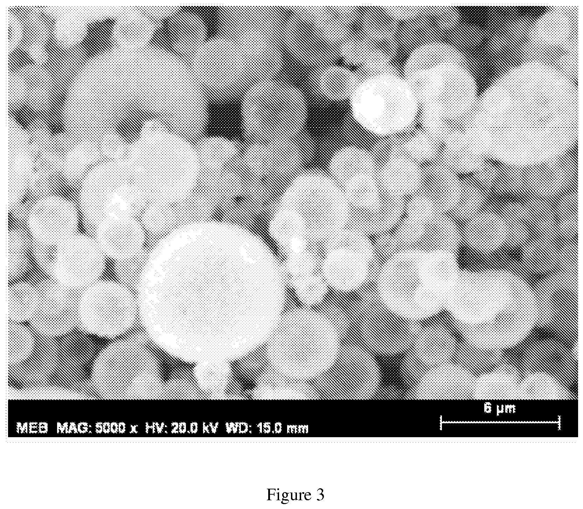

La figure 3 présente des images de microscopie Électronique à Balayage des particules creuses d'oxyde de magnésium obtenues de diamètre moyen de 2,7 microns.

### Exemple 2 : Particules creuses d'oxyde de zinc dopé

Les particules d'oxyde de zinc dopé ZnO:Al ont été préparées selon le procédé ci-dessous. Dissolution de 25,8 g de nitrate de zinc hexahydraté et 1,6 g de nitrate d'aluminium nonahydraté dans 72,5 g d'eau déminéralisée, soit une concentration molaire totale en précurseur de 1,2 mol/L. Les rapports Zn/Al peuvent être vérifiés pour atteindre le taux de dopage souhaité.

La solution précurseur est nébulisée par le procédé de spray pyrolyse selon l'invention.

Le profil des températures maximales atteintes dans le réacteur dans lequel se déroulent les étapes de séchage, pyrolyse et densification est le suivant : 300°C, 500°C, 700°C, respectivement, et l'étape de trempe est réalisée pour arriver à température ambiante avant l'étape de récupération.

### Exemples 3 et 4 : Particules creuses d'alumine $Al_2O_3$

Les particules d'alumine $Al_2O_3$ ont été préparées selon le procédé ci-dessous. Dissolution de 27 g de nitrate d'aluminium nonahydraté dans 73 g d'eau déminéralisée, soit une concentration molaire en précurseur de 1,0 mol/L.

La solution précurseur est nébulisée par le procédé de spray pyrolyse selon l'invention.

Le profil des températures maximales atteintes dans le réacteur dans lequel se déroulent les étapes de séchage, pyrolyse et densification est le suivant : 300°C, 500°C, 700°C, respectivement, et l'étape de trempe est réalisée pour arriver à température ambiante avant l'étape de récupération.

Pour les particules $Al_2O_3$ de l'exemple 4, une calcination (en post-traitement) à 1200°C permet de cristalliser la poudre en corindon (alumine alpha).

Exemple 5 : Particules creuses de mullite

Les particules de mullite ($3Al_2O_3$, $2SiO_2$) ont été préparées selon le procédé ci-dessous avec une concentration totale en précurseurs de 2,7 mol/L.

1- Dissolution de 5,3 g de nitrate d'aluminium nonahydraté dans 70,8 g d'eau déminéralisée.
2- Ajout de 16,6 g d'alcoxyde d'aluminium (l'Isopropoxyde d'aluminium) sous agitation.
3- Ajout de 7,3g d'alcoxyde de silicium (Tetra Ethyl Ortho Silicate) sous agitation.
4- Après vieillissement du sol, chauffage 2 heures à 80°C afin de permettre l'hydrolyse-condensation des alcoxydes et former le sol de mullite.

La solution précurseur est nébulisée par le procédé de spray pyrolyse selon l'invention.
Le profil des températures maximales atteintes dans le réacteur dans lequel se déroulent les étapes de séchage, pyrolyse et densification est le suivant : 300°C, 400°C, 500°C, respectivement, et l'étape de trempe est réalisée pour arriver à température ambiante avant l'étape de récupération.
Une calcination (en post-traitement) à 1200°C permet de cristalliser la poudre en mullite.
La figure 2 présente des images de microscopie Electronique à Balayage des particules creuses de mullite obtenues de diamètre moyen de 1,5 microns.

Exemple 6 : Particules creuses d'oxyde de zirconium $ZrO_2$

Les particules d'oxyde de zirconium $ZrO_2$ont été préparées selon le procédé de l'invention.
Une solution précurseur dosée à 0,6 mol/L en oxynitrate de zirconium hydraté est nébulisée par le procédé de spray pyrolyse selon l'invention.
Le profil des températures maximales atteintes dans le réacteur dans lequel se déroulent les étapes de séchage, pyrolyse et densification est le suivant : 300°C, 400°C, 500°C, respectivement, et l'étape de trempe est réalisée pour arriver à température ambiante avant l'étape de récupération.

Exemple 7 : Caractéristiques des particules

Granulométrie et sphéricité

Le tableau 1 ci-dessous rassemble les caractéristiques de granulométrie des particules obtenues aux exemples 1-6 et le calcul de la sphéricité via l'analyse d'images de microscopie électronique à balayage en approchant les formes par des ellipses 2D et en calculant le rapport de circularité.

Tableau 1

| Exemples | Nom | Formule Chimique-cristallographie | d10 | d50 | d90 | D moyen | Sphéricité |
|---|---|---|---|---|---|---|---|
| 1 | Oxyde de magnésium | MgO cfc périclase | 1,1 | 1,7 | 3,3 | 2,7 | 0,98 ±0,23 |
| 2 | Oxyde de zinc dopé Aluminium | ZnO : 6,5 % Al hexagonal | 0,4 | 0,7 | 2,3 | 1,3 | 0,95 0.95 ±0,16 |
| 3 | Alumine | $Al_2O_3$ amorphe | 0,8 | 1,1 | 2,3 | 1,2 | 0,95 ±0,15 |
| 4 | Alumine | $Al_2O_3$ alpha | 0,9 | 1,5 | 3,5 | 1,9 | 0,96 ±0,14 |
| 5 | Silicate d'aluminium | $3 Al_2O_3$, $2 SiO_2$ | 0,7 | 1,4 | 3,7 | 1,5 | 0,85 ±0,1 |
| 6 | Oxyde de zirconium | $ZrO_2$ quadratique | 0,4 | 0,6 | 1,1 | 0,4 | 0,93 ±0,17 |

Masse volumique apparente des poudres

Un pilulier de 15 ml est pesé à l'aide d'une balance de précision (à 0,001 g près). A l'aide d'un entonnoir, la poudre est versée dans le pilulier jusqu'à débordement et arasée avec une spatule au niveau de la limite supérieure du pilulier. Le pilulier plein est pesé. La masse volumique non tassée $\rho_{bp}$ est calculée (= masse de la poudre/volume)
Le pilulier plein est soumis à des vibrations pendant 20 min. Après l'arrêt des vibrations, la hauteur de la partie vide du pilulier est mesurée à 3 endroits différents. Le volume manquant est calculé en utilisant la moyenne des 3 mesures. La masse volumique tassée $\rho_{bt}$ est calculée (= masse de la poudre/volume après tassement).
Il est également calculé l'indice de Hausner qui traduit la cohésion et la coulabilité des poudres. Les poudres de la présente invention ont un indice H=1,2 signifiant que les poudres ont une bonne coulabilité.

Le tableau 2 présente les masses volumiques obtenues.

Tableau 2

| Exemple | Nom | Formule Chimique-cristallographie | Non tassée (apparente) $\rho_{bp}$ (kg/m$^3$) | Tassée $\rho_{bt}$ (kg/m$^3$) | Indice de Hausner H = $\rho_{bt}$ / $\rho_{bp}$ |
|---|---|---|---|---|---|
| 1 | Oxyde de magnésium | MgO cfc périclase | 139 $\pm$ 3 | 168 $\pm$ 2 | 1,2 |
| 2 | Oxyde de zinc dopé Aluminium | ZnO : 6,5 % Al hexagonal | 206 $\pm$ 4 | 253 $\pm$ 4 | 1,2 |
| 3 | Alumine | Al$_2$O$_3$ amorphe | 239 $\pm$ 7 | 282 $\pm$ 8 | 1,2 |
| 4 | Alumine | Al$_2$O$_3$ alpha | 293 $\pm$ 9 | 355 $\pm$ 5 | 1,2 |
| 5 | Silicate d'aluminium | 3 Al$_2$O$_3$, 2 SiO$_2$ | 474 $\pm$ 12 | 584 $\pm$ 11 | 1,2 |
| 6 | Oxyde de zirconium | ZrO$_2$ quadratique | 619 $\pm$ 8 | 763 $\pm$ 13 | 1,2 |

Préparation de pastilles pour caractériser la porosité et conductivité thermique des particules

Afin de caractériser la porosité et la conductivité thermique, les poudres de sphères (ou particules) creuses obtenues selon le procédé de l'invention peuvent être pressées sous formes sèche. Une autre méthode consiste à réaliser une barbotine en mettant en suspension les poudres de sphères dans l'eau par les techniques classiques de mélange ou par broyage en voie humide. Des liants ou dispersants organiques peuvent être ajoutés pour faciliter la mise en suspension, contrôler la viscosité, ou encore pour renforcer mécaniquement les pastilles « à cru » et améliorer le procédé de coulage.

La technique du coulage consiste à couler une barbotine dans un moule en plâtre et sécher jusqu'à l'obtention d'une pastille sèche.

Le pressage isostatique peut être également choisi, à savoir de compacter la poudre sous forme sèche ou contenant une faible fraction de solvant, sous une pression uni-axiale.

Le pressage à chaud conventionnel ou encore par frittage « Spark Plasma Sintering » peuvent être également choisis et sont compatibles avec l'invention et les poudres de sphères obtenues selon le procédé de la présente invention.

Porosité des pastilles obtenues

La porosité des pastilles frittées sont déterminées par porosimétrie à l'eau à température ambiante telle que le décrit PREVOST en 2007 pour l'application « barrière thermique » (PREVOST, Marie-Anne. Etude de nouvelles céramiques pour barrière thermique. 2007. Thèse de doctorat. Université Pierre et Marie Curie-Paris VI).

Conductivité thermique

La conductivité thermique $\lambda(T)$, donnée en W.m$^{-1}$.K$^{-1}$, est liée à la diffusivité thermique par l'expression :

$$\lambda = \rho(T)\, C_p(T)\, D(T)$$

D(T) diffusivité thermique (m$^2$/s) en fonction de la Température T

p(T) : masse volumique (kg/m$^3$) en fonction de la Température T

Cp(T) : chaleur spécifique à pression constante (J.K$^{-1}$.kg$^{-1}$), calculée à partir de données publiées.

La diffusivité thermique a été mesurée par la méthode laser flash.

Les pastilles ont été frittées à une température de 1400°C.

Le tableau 3 ci-dessous rassemble les résultats obtenus pour les matériaux d'Alumine (Al$_2$O$_3$) des exemples 3 et 4 et la mullite 3 Al$_2$O$_3$, 2 SiO$_2$ de l'exemple 5.

# EP 3 374 075 B1

Tableau 3

| | | unité | Al$_2$O$_3$ exemple 3 | Al$_2$O$_3$ exemple 4 | 3 Al$_2$O$_3$, 2 SiO$_2$ exemple 5 |
|---|---|---|---|---|---|
| Poudre | Masse volumique | Kg/m$^3$ | **239** | **293** | **139** |
| | Conductivité thermique 20°C | W/mK | - | 0,05 | - |
| Frittage Flash | Porosité | % | 70-75 % | 68%60-65 % | -50-55 % |
| | Conductivité thermique 20°C | W/mK | **0,4** | **1,34** | **0,13** |
| | Conductivité thermique 500°C | W/mK | 0,3 | 0,81,0 | -0,1 |
| | Conductivité thermique 1000°C | W/mK | 0,1 | 0,57 | -0,1 |

A titre de comparaison, et selon les mêmes méthodes de mesure, des particules Al$_2$O$_3$ denses commerciales présentent une masse volumique de 600 kg/m$^3$. Après frittage, les pastilles fabriquées à partir de ces particules présentent une porosité d'environ 45%, une conductivité thermique à 20°C d'environ 4W/mK, une conductivité thermique à 500°C d'environ 3 et une conductivité thermique à 1000°C d'environ 1.

A titre de comparaison, et selon les mêmes méthodes de mesure, les pastilles fabriquées à partir de particules commerciales de mullite présentent une porosité inférieure à 40%, une conductivité thermique à 20°C, 500°C et 1000°C d'environ 0,7W/mK.

Ainsi, les conductivités thermiques des pastilles comprenant des particules obtenues selon le procédé de l'invention sont beaucoup plus faibles que celles des poudres denses commerciales Exemple 18: Incorporation des particules obtenues selon le procédé de l'invention dans une matrice mousse de polyéthylène

Des particules creuses de type oxyde de zinc (ZnO), mullite, oxyde de magnésium MgO, oxyde d'aluminium Al$_2$O$_3$ ont pu être mises en œuvre dans cet exemple.

Les particules creuses selon l'invention ont été incorporées dans le polyéthylène par les techniques standards d'extrusion/filières et granulation afin de constituer un mélange maître.

Cas des particules creuses d'oxyde de zinc ZnO :

Une mousse de polyéthylène expansée a été réalisée par extrusion et adjonction de gaz et calandrée sous forme de film. Le grade de polyoléfine est du Polyéthylène basse densité avec environ 1% de particules creuses d'oxyde de zinc. Les poudres sont incorporées sous forme de mélanges maîtres.

Un gain d'environ +10 % a été obtenu d'un point de vue de la conductivité thermique et un abaissement d'environ - 10 % sur la masse volumique de la mousse.

La taille des bulles a été analysée par microscopie optique et l'ajout de particules creuses diminue le diamètre moyen de bulle.

Le tableau 4 rassemble les résultats obtenus

Tableau 4

| Mesures | Unités | Mousse standard - | Mousse standard 1% particules creuses de ZnO |
|---|---|---|---|
| Conductivité thermique | mW/mK | 40 | 33 |
| Masse volumique de la mousse | kg/m$^3$ | 20 | 17 |
| Emissivité | - | 0,2 | 0,2 |
| Transmittivité | - | 0,6 | 0,6 |

Exemple 9 : Incorporation de particules de MgO creuses dans une matrice d'émail

Des particules d'oxyde de magnésium MgO creuses obtenues selon le procédé de l'invention ont été dispersées dans une matrice d'émail en barbotine aqueuse selon le protocole suivant :

1/ Pré-dispersion des particules creuses en solution aqueuse : les particules creuses sont mises en suspension dans une solution aqueuse. La proportion de particules creuses peut varier entre 10% et 60 % en masse de matière solide. Dans l'exemple, a été testé 40 % de particules en masse sur extrait sec.

2/ Pré-dispersion de la poudre d'émail en solution aqueuse. La proportion de poudre d'émail peut varier entre 40% et 90 % en masse de matière solide. Dans l'exemple, a été testé 60% en masse d'émail sur extrait sec.

3/ La suspension de particules creuses est ajoutée sous agitation mécanique à la barbotine d'émail. Cette barbotine peut être constituée au final de 30 % à 60 % en masse de matière solide et 40 % à 70 % en masse de solution aqueuse. Dans l'exemple, a été testé 40% en masse.

La barbotine obtenue est déposée sur substrat métallique par projection ou par pinceau. Le substrat, revêtu d'émail, est séché sous air vers 100°C puis subit une cuisson à haute température entre 500°C et 900°C.

La conductivité thermique λ(T), donnée en W.m$^{-1}$.K$^{-1}$, est liée à la diffusivité thermique par l'expression :

$$\lambda = \rho(T)\ C_p(T)\ D(T)$$

D(T) diffusivité thermique (m$^2$/s) en fonction de la Température T

$\rho$(T) : masse volumique (kg/m$^3$) en fonction de la Température T

Cp(T) : chaleur spécifique à pression constante (J.K$^{-1}$.kg$^{-1}$), calculée à partir de données publiées

La diffusivité thermique a été mesurée par la méthode laser flash sur plaque acier revêtue d'une couche d'émail, mesurée à 100 microns.

Il a été possible de calculer la conductivité thermique λ à partir des données de mesures de la diffusivité thermique D des plaques « acier+émail ».

La capacité thermique massique Cp est approchée par celui de l'acier (500 J/kg.K).

Le tableau 5 rassemble les résultats obtenus.

Tableau 5

| | unité | Acier + 100 % Émail | Acier + 60 %Email 40 % de particules creuses MgO selon l'invention |
|---|---|---|---|
| Diffusivité thermique | 10$^6$m$^2$/s | 7,1 | 4 |
| Cp | J/kgK | 500 | 500 |
| Masse volumique | kg/m$^3$ | 7620 | 7600 |
| Conductivité thermique | W/mK | 27,2 | 15 |

## Revendications

1. Procédé de préparation d'un ensemble de particules inorganiques par pyrolyse d'aérosol, comprenant, sans ajout d'agent gonflant :

(1) la nébulisation à une température entre 10°C et 40°C d'une solution liquide contenant un précurseur du ou des matériaux inorganiques duquel ou desquels on veut former des particules à une concentration molaire supérieure ou égale à 0,5 mol/L dans la solution, de façon à obtenir un brouillard de gouttelettes de solution,

(2) le chauffage du brouillard obtenu à une température entre 150 °C et 400 °C, apte à assurer l'évaporation du solvant pour augmenter la concentration en précurseur du ou des matériaux inorganiques en périphérie des gouttelettes et apte à assurer la formation de particules, pendant une durée comprise entre 1 et 10 secondes,

(3) le chauffage des particules obtenues à l'étape (2) à une température entre 400 °C et 700°C, apte à assurer la décomposition du précurseur pour former le matériau inorganique avec simultanément la précipitation et l'extraction complète du solvant pour former la coquille des particules creuses, pendant une durée comprise entre 10 et 30 secondes,

(4) la densification de la coquille des particules obtenues à une température entre 200 °C et 1000 °C, pendant une durée comprise entre 20 et 30 secondes,

(4') éventuellement la trempe des particules obtenues, et

(5) la récupération des particules ainsi formées,

les étapes (2), (3) et (4) étant réalisées à des températures croissantes.

2. Procédé selon la revendication 1, **caractérisée en ce que** l'étape de trempe est réalisée pour atteindre une température comprise entre 15 et 50°C à une vitesse de refroidissement d'au moins 300°C/s.

3. Procédé selon la revendication 1 ou 2, **caractérisée en ce que** l'étape (4) de densification est réalisée à une température entre 400 et 800°C.

**Patentansprüche**

1. Verfahren zur Herstellung eines Satzes anorganischer Teilchen durch Aerosolpyrolyse, umfassend, ohne Zugabe eines Treibmittels:

(1) Zerstäubung bei einer Temperatur zwischen 10°C und 40°C einer flüssigen Lösung, die einen Vorläufer des/der anorganischen Materials/Materialien enthält, aus dem/denen Teilchen mit einer molaren Konzentration von größer oder gleich 0,5 mol/l in der Lösung gebildet werden sollen, um einen Nebel aus Lösungströpfchen zu erhalten,

(2) das Erhitzen des erhaltenen Nebels auf eine Temperatur zwischen 150°C und 400°C, das in der Lage ist, die Verdampfung des Lösungsmittels sicherzustellen, um die Konzentration des Vorläufers des/der anorganischen Materials/Materialien an der Peripherie der Tröpfchen zu erhöhen, und in der Lage ist, die Bildung von Teilchen sicherzustellen, für einen Zeitraum zwischen 1 und 10 Sekunden,

(3) das Erhitzen der in Schritt (2) erhaltenen Teilchen auf eine Temperatur zwischen 400°C und 700°C, das in der Lage ist, die Zersetzung des Vorläufers zur Bildung des anorganischen Materials bei gleichzeitiger Ausfällung und vollständiger Extraktion des Lösungsmittels sicherzustellen, zur Bildung der Hülle der hohlen Teilchen für einen Zeitraum zwischen 10 und 30 Sekunden,

(4) die Verdichtung der Hülle der erhaltenen Teilchen bei einer Temperatur zwischen 200°C und 1000°C für eine Zeit zwischen 20 und 30 Sekunden,

(4') gegebenenfalls Abschrecken der erhaltenen Teilchen und

(5) die Rückgewinnung der so gebildeten Teilchen,

wobei die Schritte (2), (3) und (4) bei steigenden Temperaturen durchgeführt werden.

2. Verfahren nach Anspruch 1, **dadurch gekennzeichnet, dass** der Abschreckschritt zum Erreichen einer Temperatur zwischen 15 und 50°C mit einer Abkühlgeschwindigkeit von mindestens 300°C/s durchgeführt wird.

3. Verfahren nach Anspruch 1 oder 2, **dadurch gekennzeichnet, dass** Schritt (4) der Verdichtung bei einer Temperatur zwischen 400 und 800°C durchgeführt wird.

**Claims**

1. Process for preparing a set of inorganic particles by aerosol pyrolysis, comprising, without addition of swelling agent:

(1) nebulizing at a temperature between 10°C and 40°C a liquid solution containing a precursor of the inorganic material(s) from which one wishes to form particles at a molar concentration greater than or equal to 0.5 mol/L in the solution, so as to obtain a mist of droplets in solution,

(2) heating the obtained mist at a temperature between 150°C and 400°C capable of ensuring the evaporation of the solvent to increase the concentration of precursor of the inorganic material(s) at the periphery of the droplets and capable of ensuring the formation of particles for a duration comprised between 1 and 10 seconds,

(3) heating the particles obtained in step (2) at a temperature between 400°C and 700°C, capable of ensuring the decomposition of the precursor to form the inorganic material with simultaneous precipitation and complete extraction of the solvent to form the shell of the hollow particles for a duration comprised between 10 and 30 seconds,

(4) densifying the obtained particles shell at a temperature between 200°C and 1000°C for a duration comprised between 20 and 30 seconds,

(4') optionally quenching the particles obtained, and

(5) recovering the particles thus formed,

steps (2), (3) and (4) being performed at increasing temperatures.

**2.** Process according to claim 1, **characterized in that** the quenching step is performed to reach a temperature comprised between 15 and 50°C at a cooling rate of at least 300°C/s.

**3.** Process according to claim 1 or 2, **characterized in that** the densification step (4) is performed at a temperature between 400 and 800°C.

aspiration

entrée d'air
froid

gradient de
température

Figure 1

Figure 2

MEB MAG: 5000 x HV: 20.0 kV WD: 15.0 mm    5 µm

Figure 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2973260

**Littérature non-brevet citée dans la description**

- **DEGALLAIX, SUZANNE.** Caractérisation expérimentale des matériaux: Propriétés physiques, thermiques et mécaniques. *PPUR presses polytechniques,* 2007, 103-112
- **HAUSSONNE, JEAN-MARIE.** Céramiques et verres: principes et techniques d'élaboration. *PPUR presses polytechniques,* 2005, 73-74
- **CAVARRETTA, I. ; O'SULLIVAN, C. ; COOP, M. R.** Applying 2D shape analysis techniques to granular materials with 3D particle geometries. *POWDERS AND GRAINS 2009,* 2009, vol. 1145, 833-836
- Etude de nouvelles céramiques pour barrière thermique. **PREVOST, MARIE-ANNE.** Thèse de doctorat. Université Pierre et Marie Curie-Paris, 2007